# EUROPEAN PATENT APPLICATION

(11) **EP 3 961 586 A1**
(43) Date of publication of application: **02.03.2022**
(21) Application number: 20794802.7
(22) Date of filing: 24.04.2020
(51) Int. Cl.: G07C 9/00

(54) **OPEN-TYPE INTELLIGENT SCREENING CHANNEL SYSTEM**

(30) Priority: 25.04.2019 CN 201910340263; 25.04.2019 CN 201920577587 U
(71) Applicant: Guangxi Xijiao Rail Transit Industry Technology R&D Co., Ltd, Qingxiu District Nanning City Guangxi (CN); Lai, Yuwei, Liuzhou, Guangxi 545000 (CN)
(72) Inventor: LAI, Yuwei, Liuzhou, Guangxi 545000 (CN)
(74) Representative: Vitina, Maruta
(86) International application number: PCT/CN2020/086694
(87) International publication number: WO 2020/216328

(57) **Abstract**

The present invention discloses an open-type intelligent screening channel system, which includes a guest flow guide channel, a main control unit, state indicators, a state identification unit and a locating and tracking unit. A plurality of state indicators are respectively arranged on the guest flow guide channel in sequence; one guest in the guest flow guide channel corresponds to at least one state indicator; the state identification unit is configured to send identification information to the main control unit after a state of a guest is identified; the locating and tracking unit is configured to acquire locating information of the guest and send the locating information to the main control unit; and the main control unit is configured to control work display states of the state indicators. The system disclosed by the present invention is configured to identify the state of the guest according to the position of the guest in the channel after the legality of the guest is automatically verified, so that the guest in a legal state can quickly pass without any barrier. The system is configured to carry out state reminding on a guest in an illegal state, require the guest in the illegal state to exit from a side exit channel and carry out gate stop or artificial stop on the illegal guest who refuses to exit. Therefore, the passing efficiency is greatly improved.

## Description

### TECHNICAL FIELD

The present invention relates to the field of public verification channels and particularly relates to an open-type intelligent screening channel system.

### BACKGROUND OF THE PRESENT INVENTION

Generally, existing public verification channel systems adopt artificial verification or gate channels, and one guest is permitted to pass after the guest is verified. As the vast majority of guest verification results are legal, most of verification work and opening actions of a gate have no practical meaning, causing low passing efficiency of the channels.

### SUMMARY OF THE PRESENT INVENTION

### Technical problems

The present invention provides an open-type intelligent screening channel system. The system is configured to carry out state identification according to the position of a guest in a channel after the legality of the guest is automatically verified, so that the guest in a legal state can quickly pass without any barrier. The system is configured to carry out state reminding on a guest in an illegal state, require the guest in the illegal state to exit from a side exit channel and carry out gate stop or artificial stop on the illegal guest who refuses to exit. Therefore, the passing efficiency is greatly improved.

### Solutions to problems

### Technical solutions

The present invention adopts the following technical solutions:
An open-type intelligent screening channel system includes a guest flow guide channel, a main control unit, state indicators, a state identification unit and a locating and tracking unit. A plurality of state indicators are respectively arranged on the guest flow guide channel in sequence; one guest in the guest flow guide channel corresponds to at least one state indicator; the state identification unit is configured to send identification information to the main control unit after a state of a guest is identified; the locating and tracking unit is configured to acquire locating information of the guest and send the locating information to the main control unit; and the main control unit is configured to control work display states of the plurality of state indicators.

A stop gate is arranged at a tail end of the guest flow guide channel.

A side exit channel is arranged beside the stop gate, the stop gate is composed of a soft gate piece and a hard gate piece, the soft gate piece is located at a second tail end of the guest flow guide channel, and the hard gate piece is located at a last tail end of the guest flow guide channel.

The guest flow guide channel is provided with the side exit channel which is controlled to open and close by the main control unit.

The locating and tracking unit is a locating grating device, a machine vision tracking device, an RF (Radio Frequency) locating device, a Bluetooth locating device, a WIFI (Wireless Fidelity) locating device, a mobile phone locating device, a UWB (Ultra-wide Bandwidth) receiving and locating device or a Bluetooth/infrared/ultrasonic receiving and locating device.

The state indicators are multi-color indicating lights.

Each of the state indicators is provided with an illegal state reminding unit, each of the illegal state reminding units is a display screen or a sound player, and the display screens or the sound players are connected with the main control unit.

The state identification unit includes a biological characteristic identification system, a two-dimensional code identification system, an OCR (Optical Character Recognition) scanning identification system, an ID (identity) card identification system, an RF chip identification system, a magnetic identification system, a metal detecting system, a dangerous goods detecting system, a WIFI probe or a mobile phone electronic fence system.

The biological characteristic identification system is a face identification system or a gait identification system.

The open-type intelligent screening channel system also includes a background monitoring terminal, and the main control unit is configured to send the illegal state information and the locating information of the guest to the background monitoring terminal.

The main control unit is connected with one or more of a ticket trade information database, an identity information database, an entrance guard information image database, a client body characteristic information database, a public security criminal information database and a dangerous goods characteristic information database.

### Beneficial effects of the present invention

### Beneficial effects

The present invention has the following advantages that:
1. The passing efficiency is high. The system is only configured to stop the guest identified as an illegal state and is provided with the side exit channel for the guest to exit and give way for other guests, and not every guest is stopped, thereby saving a lot of ineffective stop time, avoiding blocking of the channel and greatly improving the passing efficiency of the channel.
2. The guest experience is good. Barrier-free passing is realized for most of the guests, pause for waiting is avoided, and the passing time is shortened.
3. The stop is safe and accurate. The state is displayed visually, so that the guest identified as an illegal state is reminded while other guests are stressed, and the side exit channel is arranged for guiding the guest in the illegal state to exit the guest flow guide channel in time to avoid blocking. The soft gate piece and the hard gate piece are respectively arranged at the tail end of the guest flow guide channel to ensure safe stop, the walking time of the guest in the guest flow guide channel can be concerned by a watch man in time, and the watch man can rush to the scene in time.
4. The application scope is wide, and the system is general and flexible. The system is suitable for various occasions such as ticket service, entrance guard of real estate, security and the like and can meet different requirements by flexibly arranging and combining different state identification modules based on passing conditions according to requirements of different scenarios.

### BRIEF DESCRIPTION OF THE DRAWINGS

### DESCRIPTION OF THE DRAWINGS

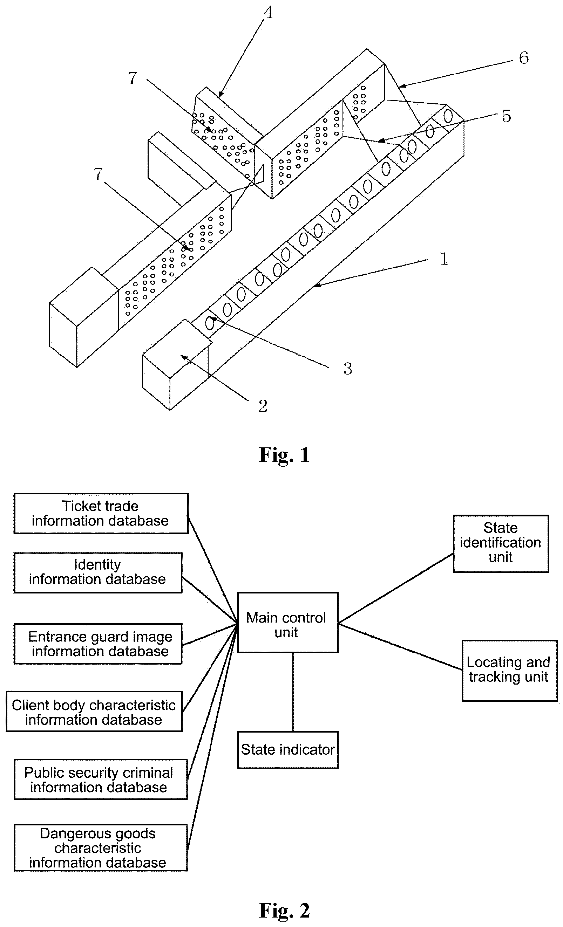

Fig. 1 is a structural schematic diagram of an open-type intelligent screening channel system in the present invention;
In Fig. 1, 1: guest flow guide channel, 2: state identification unit, 3: state indicator, 4: side exit channel, 5: soft gate piece, 6: hard gate piece, 7: infrared light curtain; and
Fig. 2 is a block diagram of a control structure of an open-type intelligent screening channel system in embodiment 7.

### OPTIMAL EMBODIMENTS FOR IMPLEMENTING THE INVENTION

### DETAILED DESCRIPTION OF THE PRESENT INVENTION

### Embodiment 1

As shown in Fig. 1, an open-type intelligent screening channel system can be applied in ticket application scenarios of railway, civil aviation, highway bus transport, shipping, urban bus, subway, parks, exhibitions or theaters and includes a guest flow guide channel 1, a main control unit, state indicators 3, a state identification unit 2 and locating and tracking units. The guest flow guide channel 1 is in a box type. The state identification unit 2 is arranged at a beginning end of the guest flow guide channel 1, and the state identification unit 2 is a ticket identifier or an ID card identifier. A two-dimensional code, an OCR picture, an RF chip or a magnetic bar code can be arranged on a ticket for carrying information, and the corresponding ticket identifier is a two-dimensional code identification system, an OCR scanning identification system, an RF chip identification system or a magnetic identification system. The locating and tracking units are a plurality of groups of high-accuracy infrared light curtains 7 that are horizontally arranged on the guest flow guide channel 1 in sequence. The state indicators 3 are a plurality of multi-color indicating lights that are respectively arranged along the guest flow guide channel 1 in sequence.

The state identification unit 2 is configured to send an identification result to the main control unit after ticket information or ID card information of a guest is identified, or the state identification unit 2 is configured to send the identification result to the main control unit after the identified information is compared with corresponding ticket purchase information in a ticket system database. The locating and tracking unit is configured to acquire locating information of the guest and send the locating information to the main control unit, and the main control unit is configured to control work display states of the multi-color indicating lights according to the received state identification information and the received locating information of the guest.

A stop gate is arranged at a tail end of the guest flow guide channel 1. The stop gate is composed of a soft gate piece 5 and a hard gate piece 6; the soft gate piece 5 is located at a second tail end of the guest flow guide channel 1; the hard gate piece 6 is located at a last tail end; and a certain interval exists between the soft gate piece 5 and the hard gate piece 6.

A side exit channel 4 is arranged beside the stop gate; at least one side exit channel 4 can also be arranged in the middle of the guest flow guide channel 1; and each side exit channel 4 is controlled to open and close by the main control unit. The side exit channel 4 is also provided with a locating and tracking device, such as the infrared light curtains 7, and the locating and tracking device is used for tracking and confirming that an illegal guest exits the guest flow guide channel 1 from the side exist channel 4.

Each of the state indicators 3 is also provided with an illegal state reminding unit, each of the illegal state reminding units is a display screen or a sound player, and the display screens or the sound players are connected with the main control unit and are used for reminding the illegal guest of a state identification result and persuading the illegal guest to exit the side exist channel 4 with characters or sounds.

The open-type intelligent screening channel system also includes a background monitoring terminal, and the main control unit is configured to send the state information identified by the state identification unit and the locating information acquired by the locating and tracking unit to the background monitoring terminal. The main control unit adopts a microprocessor or a single-chip microcomputer.

The work flow of the open-type intelligent screening channel system of the embodiment is described as follows:
The guest enters the guest flow guide channel after the state of the guest is identified by the state identification unit; the state identification unit is configured to compare the identified information and relevant information in the ticket system database after the state of the guest is identified and then send the identification result to the main control unit; meanwhile, the locating and tracking unit is configured to acquire the locating information of the guest and send the locating information to the main control unit; and the main control unit is configured to associate the identification result with the locating information and correspondingly control the display state of the state indicator corresponding to the guest dynamically. The state indicator is configured to display a color, different from that displayed for the guest in a legal state, for the guest who illegally enters the guest flow guide channel, and the state indicator is configured to inform the guest of an illegal reason in a way of voice or character display.

When the illegal guest walks to the side exit channel, the main control unit is configured to control the side exit channel to open to enable the illegal guest to exit. The stop gate is in an open state at ordinary times; and if the illegal guest does not exit from the side exit channel voluntarily, when the illegal guest walks to the tail end of the guest flow guide channel, the main control unit is configured to control the soft gate piece to close, so as to stop the illegal guest from walking continuously, and the main control unit is configured to control the hard gate piece to close after a former legal passenger walks out of the guest flow guide channel, so as to stop the illegal guest from passing in a rush way. The side exit channel can be opened in an ordinary state, or a main control module is configured to control the side exit channel to open when the illegal passenger walks to the side exit channel, the side exit channel is in one-way open type, and namely, the guest can only exit the guest flow guide channel from the side exit channel and cannot enter the guest flow guide channel from the side exit channel. The side exit channel is also provided with the locating and tracking device, such as the infrared light curtains; the locating and tracking device is configured to collect the locating information of the illegal guest passing the side exit channel in real time, send the locating information to the main control unit and track and confirm that the illegal passenger leaves the side exit channel. The main control unit is configured to control the stop gate to open again after confirming that the illegal passenger leaves the side exit channel.

### Embodiment 2

As a transformation of the embodiment 1, both the state identification unit and the locating and tracking unit adopt machine vision devices, such as machine vision cameras. The machine vision camera is configured to compare visual characteristic information and image information of the corresponding guest in a real name information image database or an entrance guard information image database of a background ticket system after the visual characteristic information, such as a face, a gait, a skull and the like of the guest is collected; the machine vision camera is configured to track the position of the guest in the guest flow guide channel in real time simultaneously and send a comparison result and real-time position information to a main control module unit; and the main control unit is configured to control the state indicator at the corresponding position.

### Embodiment 3

As a transformation of the embodiment 1, the locating and tracking unit can correspondingly adopt an RF locating device, a Bluetooth locating device, a WIFI locating device, a mobile phone locating device, a UWB receiving and locating device or a Bluetooth/infrared/ultrasonic receiving and locating device according to application scenarios of the open-type intelligent screening channel system and a passing certificate of the guest.

### Embodiment 4

As a transformation of the embodiment 1, the system also includes the background monitoring terminal or a mobile monitoring terminal. The stop gate adopts artificial stop; the main control unit is configured to send the illegal state information (including implied illegal information, such as a criminal and the like) and the locating information to the background monitoring terminal or the mobile monitoring terminal; and a worker stops the illegal guest according to the prompt of the background monitoring terminal or the mobile monitoring terminal and the indication of the state indicator.

In a state that the implied illegal information is intercepted, the state indicator of the guest flow guide channel displays a legal state. However, the state indicator corresponding to analog display at the background monitoring terminal or the mobile monitoring terminal displays an illegal state, so as to facilitate concealed stop.

### Embodiment 5

As a transformation of the embodiment 1, the state indicators are arranged on one side or two sides or the top and the bottom of the guide channel, are linearly arranged in an effective detection area of the guide channel in sequence and are configured to synchronously indicate illegal guests at different positions in a distinguishing manner.

In the embodiments 1-5, the illegal state refers to a state that is not in conformity with regulations of the ticket application scenarios, for example, the guest rushes into the channel without purchasing a ticket, the guest is in non-conformity with ticket purchase regulations, etc. The legal state refers to a state that the guest is completely in conformity with the regulations of the ticket application scenarios.

### Embodiment 6

As a transformation of the embodiments 1-5, in a security occasion, the state identification unit is a security detection component such as a metal detecting system, a Raman dangerous goods detecting system, a WIFI probe, a mobile phone fence and the like, or a holographic perception module from Zhejiang Public Safety Technology Research Institute.

### Embodiment 7

As shown in Fig. 2, as a transformation of the embodiments 1-6, the state identification unit includes a combination of an identity identification component and the security detection component in the embodiment 6. The identity identification component is an image identification component, a biological characteristic (fingerprints, pupils and the like) identification component, or a ticket verification component; the identity identification component and the security detection component are configured to respectively collect biological characteristic information, identity information or ticket information and security detection information of belongings of the guest correspondingly and send the collected information to the main control unit; the main control unit is connected with a client body characteristic information database, an identity information database, an entrance guard image information database, a ticket trade information database, a public security criminal information database and a dangerous goods characteristic information database correspondingly and is configured to compare and verify the identity information, the ticket trade information and the security detection information of the guest; and the guest is legal on the condition that the guest meets passing conditions of identity verification and security requirements at the same time.

### Embodiment 8

As a transformation of the embodiment 2, the open-type intelligent screening channel system is applied in business or other trading scenarios. The machine vision camera is configured to collect the visual characteristic information, such as the face, the gait, the skull, the fingerprints and the like of the guest when the guest enters the application scenario of the open-type intelligent screening channel system, and correspondingly, the visual characteristic information is taken as an initial certificate of a deduction record of the guest after the visual characteristic information is verified with real-name characteristics recorded in a trading system. If the account balance under real-name authentication of the guest is in conformity with the standard, the state is indicated as a legal state, visual real-name characteristic authentication is carried out on the guest again by the machine vision camera when the guest leaves through the guide channel, and the state is indicated as a legal state after the corresponding amount is deducted by the trading system. If the account balance is insufficient, the state is displayed as an illegal state, and the guest is stopped.

### Embodiment 9

As a transformation of the embodiment 1 or 2, the guest holds the passing certificate, the identity information of the guest is carried on the passing certificate by the two-dimensional code, the OCR picture, the RF chip or the magnetic bar code, or the passing certificate is an ID card, and the corresponding state identification unit is a combination of any one of the two-dimensional code identification system, the OCR scanning identification system, the RF chip identification system, the magnetic identification system and the ID card identification system with the machine vision device. The state identification unit can be irregularly arranged at multiple places in the peripheral area of the guide channel in a scattering manner according to the conditions of an application field of the system. The machine vision device is configured to bind the visual characteristic information of the guest and the identification result of the passing certificate while the passing certificate is identified; a machine vision identification device is configured to transfer the bound comparison result information to the main control unit when the guest passes the channel, and the main control unit is configured to control the state indicators at the corresponding positions.

## Claims

1. An open-type intelligent screening channel system, comprising a guest flow guide channel, a main control unit, state indicators, a state identification unit and a locating and tracking unit, wherein a plurality of state indicators are respectively arranged on the guest flow guide channel in sequence; one guest in the guest flow guide channel corresponds to at least one state indicator; the state identification unit is configured to send identification information to the main control unit after a state of a guest is identified; the locating and tracking unit is configured to acquire locating information of the guest and send the locating information to the main control unit; and the main control unit is configured to control work display states of the plurality of state indicators.

2. The open-type intelligent screening channel system according to claim 1, wherein a stop gate is arranged at a tail end of the guest flow guide channel.

3. The open-type intelligent screening channel system according to claim 2, wherein a side exit channel is arranged beside the stop gate, the stop gate is composed of a soft gate piece and a hard gate piece, the soft gate piece is located at a second tail end of the guest flow guide channel, and the hard gate piece is located at a last tail end of the guest flow guide channel.

4. The open-type intelligent screening channel system according to claim 1, wherein the guest flow guide channel is provided with the side exit channel which is controlled to open and close by the main control unit.

5. The open-type intelligent screening channel system according to claim 1, wherein the locating and tracking unit is a locating grating device, a machine vision tracking device, an RF (Radio Frequency) locating device, a Bluetooth locating device, a WIFI (Wireless Fidelity) locating device, a mobile phone locating device, a UWB (Ultra-wide Bandwidth) receiving and locating device or a Bluetooth/infrared/ultrasonic receiving and locating device.

6. The open-type intelligent screening channel system according to claim 1, wherein the state indicators are multi-color indicating lights.

7. The open-type intelligent screening channel system according to claim 1 or 6, wherein each of the state indicators is provided with an illegal state reminding unit, each of the illegal state reminding units is a display screen or a sound player, and the display screens or the sound players are connected with the main control unit.

8. The open-type intelligent screening channel system according to claim 1, wherein the state identification unit comprises a biological characteristic identification system, a two-dimensional code identification system, an OCR (Optical Character Recognition) scanning identification system, an ID (identity) card identification system, an RF chip identification system, a magnetic identification system, a metal detecting system, a dangerous goods detecting system, a WIFI probe or a mobile phone electronic fence system.

9. The open-type intelligent screening channel system according to claim 8, wherein the biological characteristic identification system is a face identification system or a gait identification system.

10. The open-type intelligent screening channel system according to claim 1, further comprising a background monitoring terminal, wherein the main control unit is configured to send the illegal state information and the locating information of the guest to the background monitoring terminal.

11. The open-type intelligent screening channel system according to claim 1, wherein the main control unit is connected with one or more of a ticket trade information database, an identity information database, an entrance guard information image database, a client body characteristic information database, a public security criminal information database and a dangerous goods characteristic information database.
